# EUROPEAN PATENT APPLICATION

(11) **EP 4 201 798 A1**
(43) Date of publication of application: **28.06.2023**
(21) Application number: 21315296.0
(22) Date of filing: 24.12.2021
(51) Int. Cl.: B63B 21/50, B63B 22/04

(54) **MOORING DEVICE FOR AN OFFSHORE WIND TURBINE**

(71) Applicant: TotalEnergies OneTech, 92400 Courbevoie (FR)
(72) Inventor: Bounhoure, François, 78290 Croissy sur Seine (FR); Raboin, Jean Christophe, 41600 Chaumont sur Tharonne (FR)
(74) Representative: Croonenbroek, Thomas Jakob

(57) **Abstract**

The invention concerns a mooring device (2) for an offshore wind turbine, the mooring device (2) comprising at least two mooring lines (6) comprising a first end (16) configured to be attached to a first attachment point of a floating offshore wind turbine platform (4), and at least three anchoring elements (8) configured to anchor the floating offshore wind turbine to a seabed, each mooring line (6) being flexibly retained through at least one anchoring element (8), a second end (20) of the mooring lines (6) being attached to an attachment point (10) in order that a first mooring line (6) length (18) extending between the floating offshore wind turbine platform (4) and the anchoring element (8) can vary in function of the forces exerted on the floating offshore wind turbine platform (4).

## Description

The invention relates to offshore wind turbines and more particularly to a mooring device for an offshore wind turbine.

Offshore wind turbines are energy generating devices placed at sea, usually more than 10 kilometres from the coast. They are connected to an electrical grid via an underwater cable.

Offshore wind turbines work in the same way as a land-based wind turbines, with the major difference that they are located offshore so that it can make better use of the wind energy driving turbines. Indeed, as the wind power is greater at sea, the installation of offshore wind turbines can allow a greater production of energy.

The placement of wind turbines at sea requires the turbines to be fixed, either on a floating platform or on a structure directly attached to the seabed. The advantage of using a floating platform is that a wind turbine resting on this platform can be placed in areas where the water depth is preferably comprised between 100 and 200 meters, whereas the use of a structure anchored directly to the seabed limits the placement of offshore wind turbines to areas where the water depth is in general less than 60 meters.

If a floating platform is used, it can be attached to the seabed by a number of lines connected at one end to the platform and at the other end to the seabed by conventional anchoring means, for example an anchor made of metal and having a sufficient weight.

In order to ensure that the mooring device, both the lines and the elements connecting them to the platform and the seabed, can withstand the forces taken up by, the turbine and the floating platform, it is necessary that this latter be flexible enough.

One way of providing such flexibility is to extend the length of the lines and the distance between them, but this method has two major drawbacks.

The first is the high cost of such an extension. The second is the surface area occupied by the resulting mooring device. Indeed, the mooring lines length increases with the water depth. This distance can therefore be around 700 meters for a water depth substantially equal to 70 meters. This may mean that the anchor lines of several wind turbines have to be crossed, which is undesirable and difficult to manage.

The aim of the invention is to provide a mooring device for an offshore wind turbine that is sufficiently flexible to take up the forces of the turbine while being as compact as possible.

To this end, the invention concerns a mooring device for an offshore wind turbine, the mooring device comprising at least two mooring lines comprising a first end configured to be attached to a first attachment point of a floating offshore wind turbine platform, and at least three anchoring elements configured to anchor the floating offshore wind turbine to a seabed, each mooring line being flexibly retained through at least one anchoring element, a second end of the mooring lines being attached to an attachment point in order that a first mooring line length extending between the floating offshore wind turbine platform and the anchoring element can vary in function of the forces exerted on the floating offshore wind turbine platform.

Thanks to this configuration, the distance between the anchoring element and the floating platform can vary to a large extent in order to take into account different weather and in particular wind conditions. This variation of the distance allows.to modulate the balance of the mooring device (the length of the different mooring lines) in function of the wind turbine displacements. In other words, the mooring device has variable lengths which lowers the forces taken up by the turbine with this modulation.

Thus, this solution allows to ensure a good anchoring thanks to a dynamic device. Consequently, the mooring device size can be significantly reduced, up to 50%. A horizontal displacement of the floating offshore wind turbine platform could be reduced to the half of the water depth.

Finally, the high flexibility of the mooring device allows to reduce the efforts suffered by this latter. This reduction can be divided by three. The mooring device according to the invention is used in an optimal depth preferably comprised between 80 and 200 meters.

The mooring device according to the invention can comprise at least one of the following features:
- the second ends of at least two mooring lines can be linked to a same central connection point, a second mooring line length extending between the central connection point and the anchoring element. This is a simple way to connect the different ' mooring lines between them in order to allow the variation of distance described above;
- the central connection point can comprise a buoying device. This .module can for example be a buoy. It can be displaced by the mooring line when the floating offshore wind turbine platform, allowing the variation of distance described above;
- the central connection point can be configured to be anchored to the seabed. It can contribute to the anchoring of the offshore wind turbine;
- the central connection point can be configured to be linked to the floating offshore wind turbine platform;
- the central connection point can comprise a tie in point to which the second end of at least two mooring lines are linked, the tie in point comprises a connection port for a tether linking the central connection point to the floating offshore wind turbine platform. This is an optimal way to connect the buoying device with the floating offshore wind turbine platform;
- the second end of at least one mooring line can be configured to be linked to a second attachment point of the floating offshore wind turbine platform, the mooring line passing through at least a first and a second anchoring elements in order that the distance between the floating offshore wind turbine platform and the first anchoring element is shortened whereas the distance between the floating offshore wind turbine platform and the second anchoring element is lengthened;
- at least one mooring line portion, in particular the mooring line portion located between the anchoring element and the second attachment point, can be equipped with at least one buoying device. This allows to avoid any damage to the mooring line portion that could be dragged on the seabed;
- the second end of each mooring line is attached to a different buoying device. This is a simple and efficient way to allow mooring line length variations explained above;
- at least one anchoring element can comprise a pulley having at least two degrees of freedom, the mooring line passing through the pulley. The pulley forms a simple way to give a good flexibility to the mooring device in being adjustable in azimuth;
- the pulley can have a diameter comprised between 1 meter and 4 meters and the cross section of the mooring lines can be comprised between 20 and 35 centimetres;
- the pulley can comprise a wheel made of plastic material. The use of non-corrosive material is an advantage in a marine environment;
- the pulley can comprise a bracket configured to be attached to the seabed, the bracket being preferably configured to place the pulley at a distance substantially equal to 1 meter from the seabed. A distancing between the pulley and the seabed is interesting in order to avoid any silting of the pulley;
- at least one part of the pulley can be made of metal, the pulley comprising a sacrificial anode in contact with the part made of metal. The use of such a sacrificial anode allows to protect the part made of metal from corrosion;
- At least one anchoring element can comprise a buckle and at least one mooring line passed through the buckle;
- The mooring lines can be made of polypropylene;
- The mooring lines can comprise at least one portion made of elastomeric material. This allows to increase the flexibility of the mooring device;

The invention also concerns an offshore wind turbine comprising a turbine, an offshore wind turbine platform and a mooring device according to the invention.

Preferably, the offshore wind turbine floating platform can comprise a tether connecting the floating offshore wind turbine platform to a central connection element, the tether length being comprised between 1/2 and 3/4 of the water depth.

### Brief description of the drawings

The invention will be better understood in view of the following description, referring to the annexed Figures in which:
- Figure 1 is a tilted perspective view of a mooring device according to a first embodiment of the invention;
- Figure 2 is a top view of the mooring device of figure 1;
- Figure 3 is a tilted perspective view of a mooring device according to a first variant of a second embodiment of the invention;
- Figure 4 is a top view of the mooring device of figure 3;
- Figure 5 is a titled perspective view of a mooring device according to a second variant of a second embodiment of the invention;
- Figure 6 is a titled perspective view of a mooring device according to a third variant of a second embodiment of the invention;
- Figure 7 is a titled perspective view of a mooring device according to a fourth variant of a second embodiment of the invention;
- Figure 8 is a titled perspective view of a mooring device according to a fifth variant of a second embodiment of the invention;
- Figure 9 is a tilted perspective view of a mooring device according to a third embodiment of the invention.

### Detailed description

A mooring device 2, linked to a floating offshore wind turbine platform 4 is shown on figures. The floating offshore wind turbine platform 4 can be a three legs semi-submersible platform commonly used for this purpose (and shown on the figures).

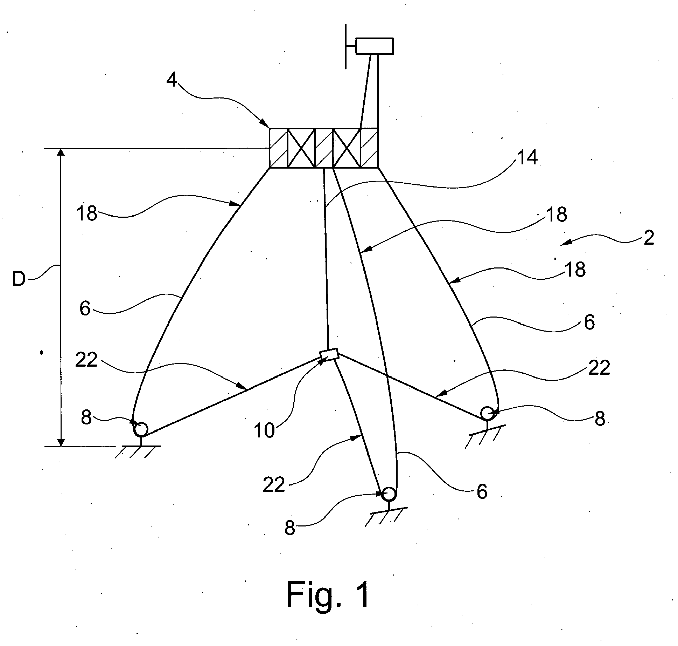

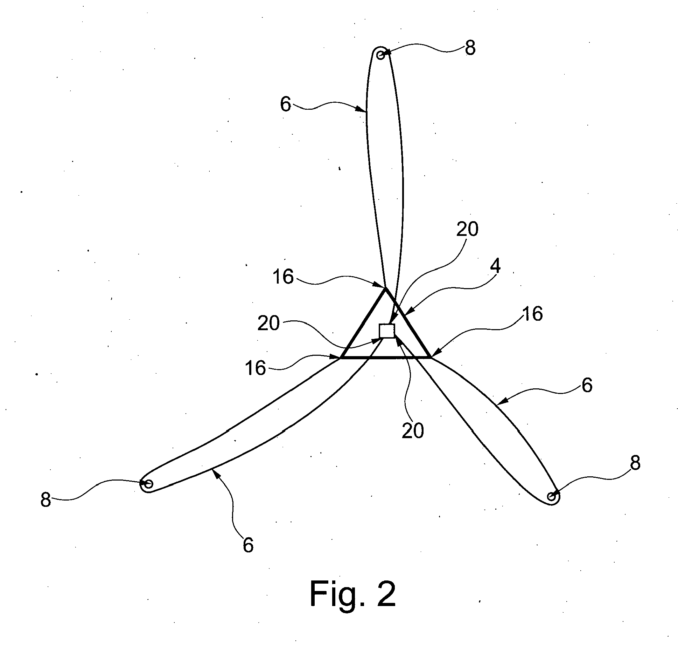

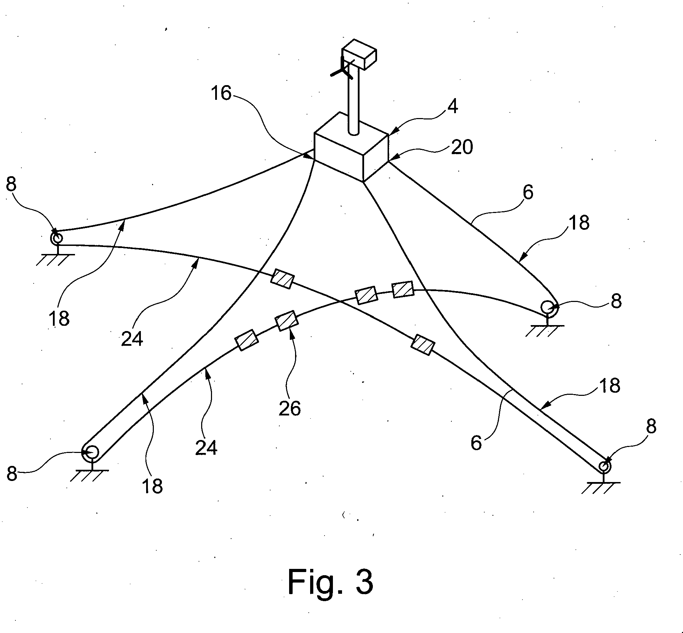

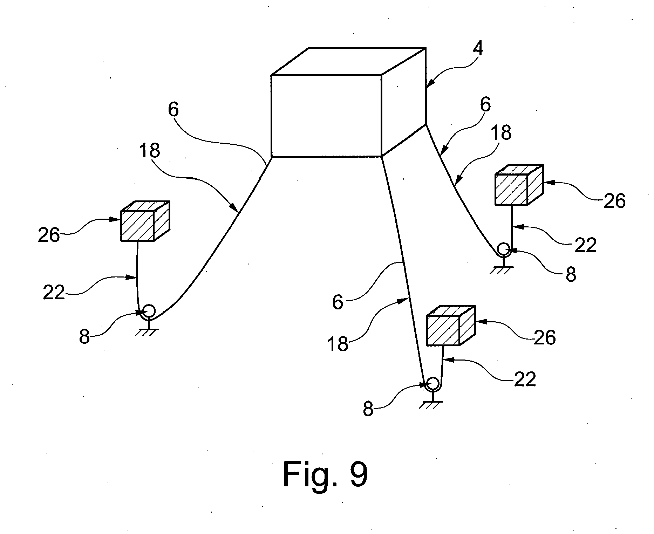

The mooring device 2 comprises several mooring lines 6. The number of mooring lines 6 can vary in function of the embodiments. For example, and according to a first embodiment shown on figures 1 and 2, the mooring device 2 comprises three mooring lines 6. However, and according to a second embodiment shown on figures 3 to 8, the mooring device comprises between two and or four mooring lines 6. Finally, and according to a third embodiment of the invention shown on figure 9, the mooring device 2 comprises three mooring lines 6. The reasons of this change of mooring lines 6 number will be explained when the embodiments will be disclosed more precisely.

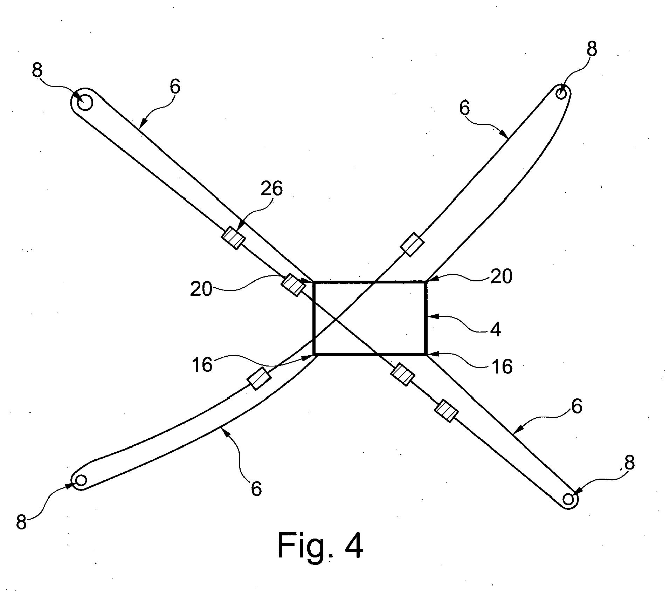

A first end 16 (referenced on figures 2 and 4 for readability matters) of each mooring line 6 is attached to the floating offshore wind turbine platform 4. This connection can be made using a H-link mooring connector as an intermediate part between the mooring line 6 and the floating offshore wind turbine platform 4. This kind of connector facilitates installation of mooring lines 6. The floating offshore wind turbine platform 4 can also comprise several buckles to connect the mooring lines 6.

The mooring device 2 also comprises several anchoring elements 8, at least three anchoring elements 8, configured to anchor the floating offshore wind turbine to a seabed. The number of anchoring elements 8 can vary for each embodiment as explained below..

Each mooring line 6 is flexibly retained through at least one anchoring element 8, a second end of each mooring line 6 being attached to an attachment point in order that a first mooring line length 18 extending between the floating offshore wind turbine platform 4 and the anchoring elements 8 can vary in function of the forces exerted on the floating offshore wind turbine platform 4.

In other words, the anchoring elements 8, whatever their form, do not block the mooring lines 6 passing through them. The mooring lines 6 are attached thanks 'to a first end 16 to the floating offshore wind turbine platform 4 and thanks to a second end 20 (referenced on figures 2 and 4 for readability matters) to an attachment point which can be a central connection point 10 according to the first embodiment of the invention, or which can form a part of the floating offshore wind turbine platform 4 (second embodiment of the invention) or a part of a buoying device 26 (third embodiment of the invention).

The anchoring element 8 divides the mooring line 6 in two portions on both sides of the anchoring element 8. This latter letting the mooring line 6 passing through it, a transfer of mooring line 6 length can be realized, allowing to lengthen or shorten the first mooring line length 18 extending between the floating offshore wind turbine platform 4 and the anchoring elements 8.

This length variation of each mooring line 6 allows a change of the whole form of the mooring device 2. Typically, one or several first mooring line lengths 18 extending between the floating offshore wind turbine platform 4 and an or several anchoring elements 8 can be lengthened while one or several first mooring line lengths 18 extending between the floating offshore wind turbine platform 4 and others anchoring elements 8 can be shortened. It allows a horizontal displacement (i.e., on the water surface) of the floating offshore wind turbine platform 4 in a magnitude up to 50% of water depth D. This allows to reduce the efforts suffered by this latter. These forces can be divided by three.

According to the first and preferred embodiment shown on figures 1 and 2, the mooring device 2 comprises three mooring lines 6 and three anchoring elements 8, each mooring line 6 passing through an anchoring element 8. The second end 20 of the mooring lines 6 are linked to a same central connection point 10, a second mooring line length 22 extending between the central connection point 10 and the anchoring element 8. The anchoring elements 8 are anchored in the seabed.

In such an embodiment, the central connection point 10 can comprise a buoying device (not shown on figure 1, one buoying device 26 being referenced on figures 3 to 9), for example a buoy. This buoying device is submerged, it can comprise a tie-in point to connect the second ends 20 of at least two mooring lines 6, preferably of all the mooring lines 6, to a same point on the central connection point 10.

The use of a buoying device, and more broadly of a mobile central connection point 10,_{.} gives more softness to the mooring device 2. In other words, the central connection point 10 can displace itself relatively to the anchoring elements 8. For example, it can come closer to one anchoring element 8. Thus, there is a transfer of the mooring line 6 length from the portion extending between the central connection point 10 to the anchoring element to the portion extending between the anchoring element 8 and the floating offshore wind turbine platform 4. The central connection point 10 coming closer to an anchoring element 8 moves away from at least one other anchoring element 8. Thus, there is a transfer of the mooring line 6 length from the portion extending between the anchoring element 8 and the floating offshore wind turbine platform 4 to the portion extending between the central connection point 10 and the anchoring element 8. These movements give some softness to the mooring device 2.

The use of a buoying device also allows to protect the mooring lines 6. Indeed, the Archimedes' buoyancy of this device compensates the mooring lines 6 weight (i.e., of the portion extending between the anchoring elements 8 and the buoying device 10) and allows to lift them from the seabed. Thus, the mooring lines 6 are not dragged on the seabed. This advantage is the same for the buoying devices used in the other embodiments of the invention.

The central connection point 10 can be configured to be anchored to the seabed. This anchoring stabilizes the mooring device 2. This anchoring can be performed using a first link. This first link can be elastically deformable or not, depending on global softness desired when the mooring device 2 is realized.

Preferably, the central connection point 10 can be linked to the floating offshore wind turbine platform 4. This linking allows between other things to reduce the central connection element 10 size, for example the buoying device size (or avoid the use of a buoying device). Preferably, the tie-in point to which at least two mooring lines 6 are linked is also used to attach a second link, for example a tether connecting the central connection point 10 to the floating offshore wind turbine platform 4. This tether 14 can have the same properties than the first link used to anchor the central connection point 10 to the seabed (for example, it can be elastically deformable), The tether 14 can be attached to the platform using means similar to the connection means using to connect the mooring lines 6 to the floating offshore wind turbine platform 4, for example a H-link (or others forged or moulded connector) mooring connector.

The tether 14 length can be comprised between 1/2 and 3/4 of the water depth. This allows to give more flexibility to the mooring device 2.

According to a first variant of a second embodiment shown on figures 3 and 4 and cumulative with the first embodiment, the second end 20 of at least one mooring line 6 (in the figures two mooring lines 6) is linked to a second attachment point of the floating offshore wind turbine platform 4 (this connection can be performed using the same means than the ones used to attach first end of mooring lines 6).

In such an embodiment, the mooring lines 6 pass through at least a first and a second anchoring elements 8 in order that the distance between the floating offshore wind turbine platform 4 and the first anchoring element 8 is shortened whereas the distance between the floating offshore wind turbine platform 4 and the second anchoring element 8 is lengthened. The transfer of mooring line 6 length is performed via an intermediate portion 24 extending between the two anchoring elements 8. This embodiment allows a variation of mooring lines 6 length without using any central connection point 10 thanks to a transfer of mooring lines 6 length between several portions of a same mooring line 6.

Preferably, at least one mooring line 6 portion, in particular the mooring line 6 portion 24 located betweentwo anchoring elements 8, is equipped with at least one buoying device 26 The use of buoying device 26 allows to avoid mooring lines 6 to be dragged on the seabed. Indeed, the mooring lines 6 could be damaged rubbing on the seabed or being in contact with each other:

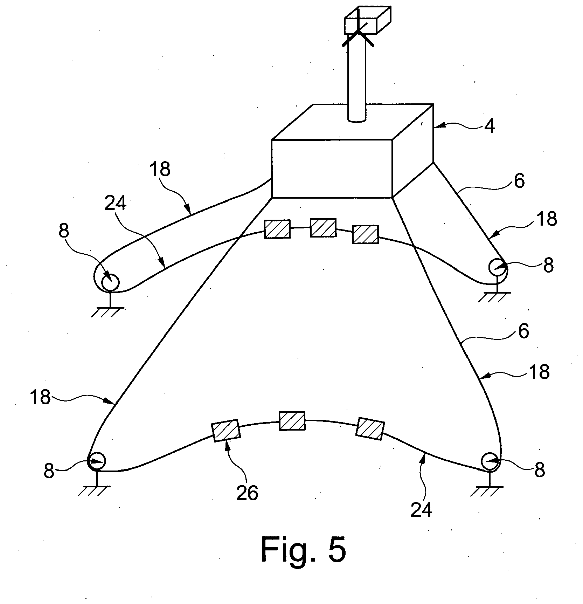

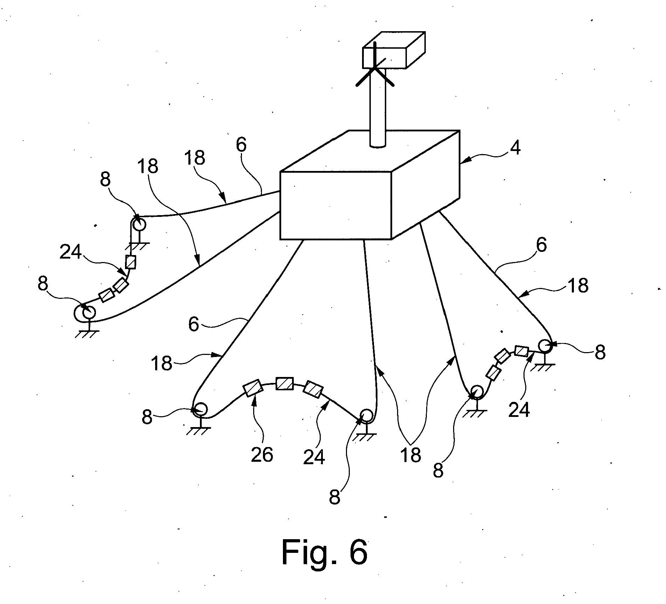

Figures 5 and 6 show two other variants of this second embodiment. In these two other variants, the two (figure 5) or three (figure 6) mooring lines 6 do not cross each other. Except that difference, the operating mode of these two variants is identical to the one of the first variant (length transmission between two first mooring line length 18 extending between the floating offshore wind turbine platform 4 and anchoring elements 8 thanks to an intermediate portion 24). Furthermore, intermediate portions 24 are equipped with buoying devices 26.

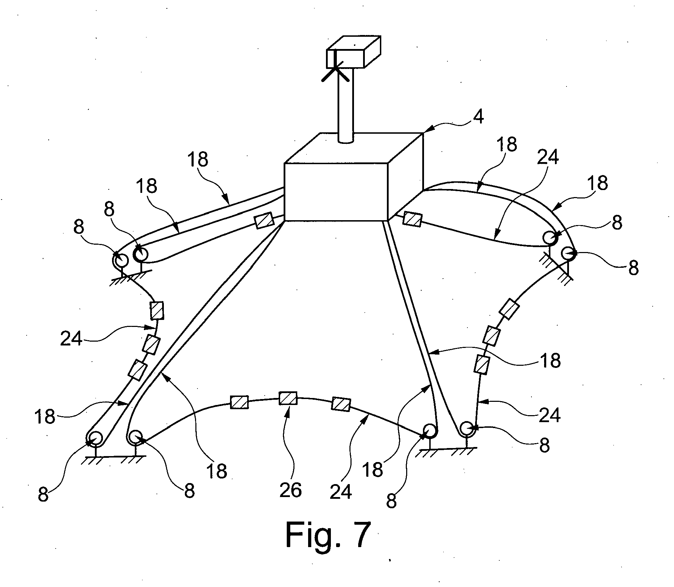

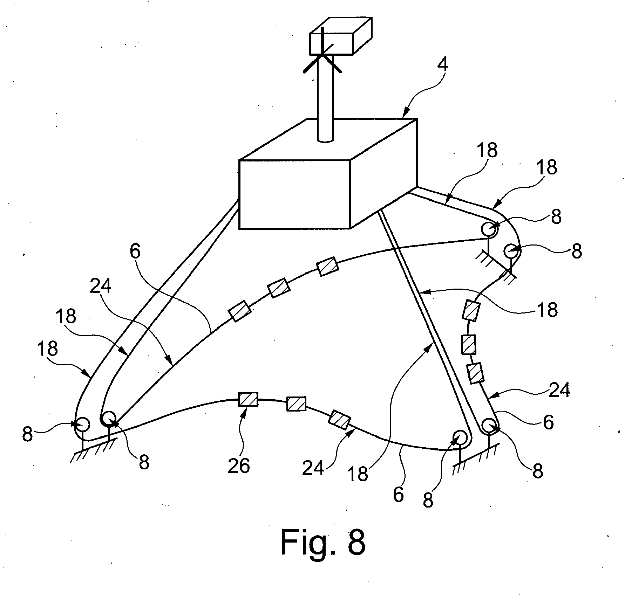

According to two other variants of the second embodiment of the invention shown on figures 7 and 8, several mooring lines 6 can be used, as in the first, second and third variants of the second embodiment (each mooring line 6 extending between two attachment points of the floating offshore wind turbine platform 4) but their disposal is different.

In the example shown on figure 7 (fourth variant of this second embodiment), the floating offshore wind turbine platform 4 comprises four angles (this number can vary), each angle comprising two attachment points (as described above) to attach the first ends 16 of two mooring lines 6.

Four mooring lines 6 are used. Two mooring lines 6 attached to the same angle of the floating offshore wind turbine platform 4 extend to a same anchoring area comprising two anchoring elements 8. This allows to double the mooring lines 6 between each attachment point of floating offshore wind turbine platform 4 and each anchoring area.

Each of the two mooring lines 6 passes through one of these two anchoring elements 8 and extends until another anchoring area, a different anchoring area for each mooring line 6. There is a total of four anchoring areas and eight anchoring elements 8 (collaborating with the four mooring lines 6).

In other words, each mooring line 6 is attached to a first attachment point of the floating offshore wind turbine platform 4, extends to a first anchoring area (forming a first mooring line length 18 extending between the floating offshore wind turbine platform 4 and an anchoring elements 8) with another first mooring line 6, passes through a first anchoring element 8, extends to a second anchoring area (forming the intermediate portion 24) where it is joined by another second mooring line 6, passes through a second anchoring element 8 and extends, with the other mooring line 6, to the floating offshore wind turbine platform 4 in order to be attached to a second attachment point of this latter (forming another first mooring line length 18 extending between the floating offshore wind turbine platform 4 and an anchoring elements 8).

Buoying devices 26 are preferably used as in the second embodiment variants for the same reasons (lift the mooring lines 6 to the seabed).

Figure 8 shows a fifth variant of the second embodiment. The mooring device 2 of this variant works as the fourth variant, the difference between these two variants being the number of mooring lines 6 (three instead of four mooring lines 6).

Figure 9 shows a third and preferred embodiment of the mooring device 2 according to the invention. In this third embodiment, three mooring lines 6 are used (this number could vary), each mooring line 6 extending from the floating offshore wind turbine platform 4 an anchoring element 8 (forming the first mooring line length 18 extending between the floating offshore wind turbine platform 4 and the anchoring element 8). Each mooring line 6 passes through the anchoring element and extends from this latter to a buoying device 26 (forming the second mooring line length 22 extending between the anchoring element 8 and the buoying device 26). Each mooring line 6 is attached to a different buoying device 26.

Each buoying device 26 can move with respect to the anchoring element 8. These movements allow to transfer some mooring line 6 length between the first mooring line length 18 and the second mooring line length 22. This transfer allows a horizontal displacement the floating offshore wind turbine platform 4 as explained above.

Preferably, at least one (preferably all of them) anchoring element 8 comprises a pulley having two degrees of freedom, the mooring line 6 passes through the pulley. The use of a pulley being adjustable in azimuth confers to the mooring device 2 a good flexibility, the pulley being able to follow the mooring line 6 movements inducted by the floating offshore wind turbine platform 4 movements.

The diameter of the pulley, more precisely of the wheel of the pulley, is determined in function of the mooring line 6 cross-section. For example, the pulley diameter can be comprised between 1 meter and 4 meters when the cross-section of the mooring line 6 is comprised between 20 centimetres and 35 centimetres, preferably substantially equal to 30 centimetres.

The pulley can comprise a bracket configured to be attached to the seabed, the bracket being preferably configured to place the pulley at a distance substantially equal to 1 meter from the seabed. It is interesting to place the pulley away from the seabed in order to avoid any silting of the pulley. This distance has to be determined with accuracy. Indeed, this latter should not be oversized to avoid the exercise of undesirable forces on the pulley. A distance substantially equal to 1 meter is a good compromise.

The pulley is preferably made of plastic material. More broadly, the use of a non-corrosive material is preferred in a marine environment. This allows to put in place a mooring device 2 more sustainable.

Preferably, the pulley wheel can be realized in nylon comprising solid lubricant additives in order to obtain a sustainable wheel, mainly considering the rub resistance properties of this latter. For example, the use of Nylatron^{®} is interesting.

For the same reasons of sustainability, the mooring lines 6 can be made of polypropylene. They can comprise at least one portion made of elastomeric material (for example natural rubber, thermoplastic elastomer, polychloroprene or hydrogenated nitrile butadiene rubber). This allows to modulate the elasticity of the mooring lines 6 regarding the result needed. For example, it can be interesting to obtain a portion of mooring line 6 having an elongation equal to 300% of its initial length of these portions made of elastomeric material. The mooring lines 6 properties (material used to made it, use of elastomeric material, number of elastomeric portion) depend on the result needed.

If the pulley comprises at least one part made of metal, the pulley can comprise a sacrificial anode in contact with the part made of metal. The use of such a sacrificial anode allows to protect the part made of metal from corrosion. The material constituting this anode and the working of this latter will not be explained in this description.

The anchoring element could be a buckle, at least one mooring line 6 passing through the buckle. The buckle is a very simple way to perform a flexible retention of the mooring lines 6 as described in this application.

Preferably, the buckles used comprise at least one local enlargement receiving the mooring line 6 passing through the buckle. This allows to preserve the mooring lines 6 from degradation due to the flexion of these latter in the buckle. Preferably, and in order to preserve the buckle from degradation due to the forces exerted on them, the buckles are made of metal. A material with a low coefficient of friction can be used to form the part of the buckle against which a mooring line 6 is configured to slide.

In some embodiments in which several forces, extending in different directions, can be exerted on a same anchoring element 8, the use of a buckle is preferred.

More broadly, multidirectional cable guides can be used as anchoring elements, such as ecubier or cable guide comprising rotable roller means. These means let the mooring lines 6 slide through them and accept some flexion of the mooring lines 6.

### List of references

- 2:: mooring device
- 4:: floating offshore wind turbine platform
- 6:: mooring lines
- 8:: anchoring elements
- 10:: central connection point
- 14:: tether
- 16:: first end
- 18:: first mooring line length
- 20:: second end
- 22:: second mooring line length
- 24:: intermediate portion
- 26:: buoying device
- D:: water depth

## Claims

1. Mooring device (2) for an offshore wind turbine, the mooring device (2) comprising at least two mooring lines (6) comprising a first end (16) configured to be attached to a first attachment point of a floating offshore wind turbine platform (4), and at least three anchoring elements (8) configured to anchor the floating offshore wind turbine to a seabed,
**characterized in that** each mooring line (6) is flexibly retained through at least one anchoring element (8), a second end (20) of the mooring lines (6) being attached to an attachment point (10) in order that a first mooring line length (18) extending between the floating offshore wind turbine platform (4) and the anchoring element (8) can vary in function of the forces exerted on the floating offshore wind turbine platform (4).

2. Mooring device (2) according to claim 1, wherein the second ends (20) of at least two mooring lines (6) are linked to a same central connection point (10), a second mooring line length (22) extending between the central connection point (10) and the anchoring element (8).

3. Mooring device (2) according to claim 2, wherein the central connection point (10) comprises a buoying device.

4. Mooring device (2) according to any of claims 2 or 3, wherein the central connection point (10) is configured to be anchored to the seabed.

5. Mooring device (2) according to any of claims 2 to 4, wherein the central connection point (10) is configured to be linked to the floating offshore wind turbine platform (4).

6. Mooring device (2) according to claim 5, wherein the central connection point (10) comprises a tie in point to which the second end (20) of at least two mooring lines (6) are linked, the tie-in point comprises a connection port for a tether (14) linking the central connection point (10) to the floating offshore wind turbine platform (4).

7. Mooring device (2) according to any of the previous claims, wherein the second end (20) of at least one mooring line (6) is configured to be linked to a second attachment point of the floating offshore wind turbine platform (4), the mooring line (6) passing through at least a first and a second anchoring elements (8) in order that the distance between the floating offshore wind turbine platform (4) and the first anchoring element (8) is shortened whereas the distance between the floating offshore wind turbine platform (4) and the second anchoring element (8) is lengthened.

8. Mooring device (2) according to any of the previous claims, wherein the second end (20) of each mooring line (6) is attached to a different buoying device (26).

9. Mooring device (2) according to any of the previous claims, wherein at least one mooring line (6) portion (24), in particular the mooring line (6) portion (24) located between the anchoring element and the second attachment point, is equipped with at least one buoying device.

10. Mooring device (2) according to any of the previous claims, wherein at least one anchoring element (8) comprises a pulley having at least two degrees of freedom, the mooring line (6) passed through the pulley.

11. Mooring device (2) according to claim 10, wherein the pulley comprises a bracket configured to be attached to the seabed, the bracket being preferably configured to place the pulley at a distance substantially equal to 1 meter from the seabed.

12. Mooring device (2) according to any of the claims 10 or 11, wherein at least one part of the pulley is made of metal, the pulley comprising a sacrificial anode in contact with the part made of metal.

13. Mooring device (2) according to any of claims 1 to 9, wherein at least one anchoring element (8) comprises a buckle and at least one mooring line (6) passed through the buckle.

14. Offshore wind turbine comprising a turbine, an offshore wind turbine platform (4) and a mooring device (2) according to any of claims 1 to 13.

15. Offshore wind turbine according to claim 14, wherein the offshore wind turbine platform comprising a tether (14) connecting the floating offshore wind turbine platform (4) to a central connection point (10), the tether (14) length being comprised between 1/2 and 3/4 of the water depth (D).
